# EUROPÄISCHE PATENTSCHRIFT

(11) **EP 0 479 049 B1**
(45) Veröffentlichungstag und Bekanntmachung des Hinweises auf die Patenterteilung: **02.11.1995**
(21) Anmeldenummer: 91115884.8
(22) Anmeldetag: 19.09.1991
(51) Int. Cl.: G03B 27/46, G03B 27/73

(54) **Fotografisches Kopiergerät mit einer Einrichtung zur Veränderung des Abbildungsma stabes**
Photographic printer with an image-scale changing device
Imprimante photographique avec un dispositif de changement de l'échelle de l'image

(30) Priorität: 02.10.1990 DE 4031111
(43) Veröffentlichungstag der Anmeldung: 08.04.1992
(73) Patentinhaber: Agfa-Gevaert AG, 51373 Leverkusen (DE)
(72) Erfinder: Findeis, Günter, Dipl.-Phys., W-8021 Sauerlach (DE); Jacob, Friedrich, Dipl.-Phys., W-8000 München 83 (DE); Schulz, Eberhard, Dipl.-Ing., W-8025 Unterhaching (DE)

(56) Entgegenhaltungen:
- WO-A-70/01472
- DE-A- 3 245 657
- US-A- 4 967 266

## Beschreibung

Die Erfindung betrifft ein fotografisches Kopiergerät nach dem Oberbegriff des Anspruchs 1.

Bei vielen Kopiergeräten wird die Variation des Abbildungsmaßstabes durch Einsatz eines Vario-Objektivs realisiert, das so aufgebaut ist, daß auch bei einer Änderung des Abbildungsmaßstabes der Abstand zwischen Vorlagenbühne und Träger des Kopiermaterials nicht verändert werden muß. Bei entsprechender Ausbildung der Vario-Objektive besteht auch die Möglichkeit, den Abbildungsmaßstab über eine formatfüllende Abbildung der gesamten Vorlage auf das Kopiematerial hinaus auszudehnen, d. h. Ausschnitte der Vorlage formatfüllend auf das Kopiermaterial aufzubelichten. Eine weitere Möglichkeit, Bilder nach den Wünschen des Kunden optimal zu gestalten, besteht darin, die Vorlagenbühne gegenüber dem Abbildungsstrahlengang in der Bildebene zu verschieben und damit auch außermittig liegende Ausschnitte der Vorlage zu kopieren. Dabei entsteht das Problem, den tatsächlich wiedergegebenen Ausschnitt im Verhältnis zur Größe des gerade verfügbaren Kopiermaterials richtig zu beurteilen. Aus der DE-A- 32 45 657 bekannte Geräte hierfür verwenden für die Einstellphase einen in den Strahlengang bewegbaren, unter 45° zu diesem geneigten Spiegel, der den Abbildungsstrahlengang auf eine in einer konjugierten Bildebene angeordnete Mattscheibe mit Markierungen für die verschiedenen Positivformate umlenkt. Auf dieser kann dann von der Außenseite her das Bild betrachtet werden, was jedoch bei in hellen Räumen betriebenen Kopiergeräten wegen des Fremdlichtes zu Problemen führt.

Die Aufgabe besteht also darin, eine auch bei Fremdlicht nutzbare, kostengünstige Einrichtung zur Anzeige des bei der jeweiligen Einstellung des Kopiergerätes zur Wiedergabe vorgesehenen Vorlagenbereiches zu schaffen.

Diese Aufgabe wird gelöst durch die in Anspruch 1 beschriebenen Merkmale.

Die auf die Mattscheibe 8 gerichtete Video-Kamera gibt den gesamten, auf der Mattscheibe sichtbaren Vorlagenteil auf dem Monitor wieder; werden mit entsprechenden fernsehtechnischen Mitteln auf dem Monitor die jeweils verfügbaren Kopiermaterial-Formate sichtbar gemacht, so kann damit die Lage des Vorlagenausschnittes zu der späteren Kopie überprüft werden.

Weitere Einzelheiten und Vorteile der Erfindung ergeben sich aus den Unteransprüchen im Zusammenhang mit der Beschreibung eines Ausführungsbeispiels, das anhand von Figuren erläutert ist. Es zeigen:
- Fig. 1: den mechanisch-optischen Aufbau eines erfindungsgemäßen fotografischen Kopiergerätes in einem Prinzipbild,
- Fig. 2: den prinzipiellen Schaltungsaufbau der fernsehtechnischen Mittel und
- Fig. 3: die Einteilung der verschiedenen Bereiche auf dem Schirm des Monitors.

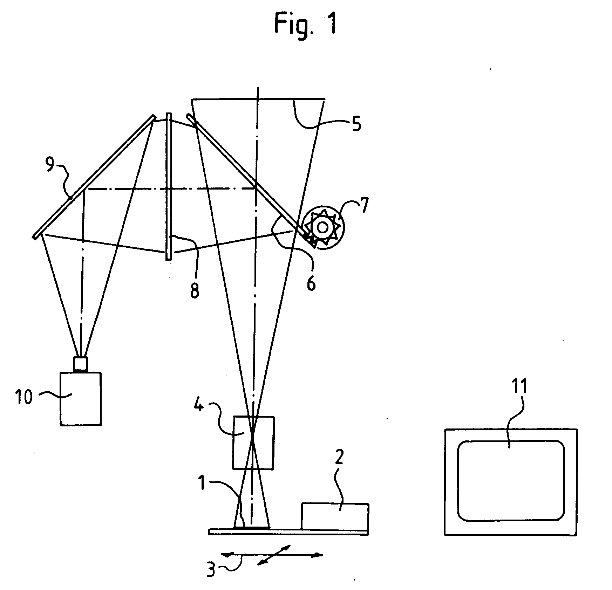

In Fig. 1 ist mit 1 eine fotografische Kopiervorlage bezeichnet, die z. B. auch in Form eines längeren Filmes vorliegen kann. Im einfachsten Fall wird sie auf einer bekannten Kopierbühne von Hand in die richtige Position zu den Rändern des ausgeleuchteten Bereiches gebracht. Die nicht dargestellte Kopierlichtquelle befindet sich dabei unterhalb der Vorlagenbühne 2. Diese kann nach der Lehre der DE-A 34 37 222 aufgebaut sein, wobei ein Film erst vollständig unter Abtastung auf Dichtewerte in einen Speicher eingezogen wird und nach Berechnung der Positionen der Bildfelder und der zugehörigen Kopierlichtmengen Schritt für Schritt durch die Bühne 2 geschoben und kopiert wird. Diese Vorlagenbühne 2 ist auf einem Kreuzschlitten 3 angeordnet, so daß die Bühne jeweils um die halbe Vorlagenausdehnung des Standard-Formats 24 x 36 mm aus der Mittellage herausbewegt werden kann. Schließlich ist in nicht dargestellter Weise die Bühne 2 auch noch um 90° schwenkbar.

Oberhalb der Vorlage 1 ist ein Vario-Objektiv 4 angeordnet, das mit einstellbaren Abbildungsmaßstäben die Vorlagenebene scharf abbildet in eine Bahn für Kopiermaterial 5. An geeigneter Stelle zwischen dem Vario-Objektiv und dem Kopiermaterial 5 ist ein Spiegel 6 angeordnet, der unter 45° zur Achse des Abbildungsstrahlenganges in diesen einführbar bzw. aus diesem entfernbar ist. Bei dem gezeigten Ausführungsbeispiel ist dieser Spiegel in seiner Ebene durch einen Antrieb 7 aus dem Strahlengang heraus bzw. in diesen hinein verschiebbar angeordnet. In gleicher Weise könnte der Spiegel auch als Klappspiegel ausgebildet sein. In der gegenüber dem Spiegel 6 zur Kopiermaterialebene 5 konjugierten Ebene ist eine Mattscheibe 8 mit unmittelbar benachbarter Fresnellinse angeordnet. Die Fresnellinse liegt vorzugsweise vor der Mattscheibe, wo sie als Feldlinse wirkt. Auf der Mattscheibe wird deshalb bei in den Strahlengang eingefahrenem Spiegel 6 ein scharfes Bild der Vorlage 1 entworfen. Die Fresnellinse dient dazu, das aus der Mattscheibe austretende Licht einigermaßen zu bündeln, so daß das über einen weiteren Umlenkspiegel 9 in das Objektiv einer Video-Kamera 10 eintretende Licht für eine Fernseh-Wiedergabe ausreicht.

Die Video-Kamera 10 ist eine sehr preiswerte Schwarz/Weiß-Kamera, deren Bilder über noch zu erläuternde Mittel auf einem Monitor 11 wiedergegeben werden.

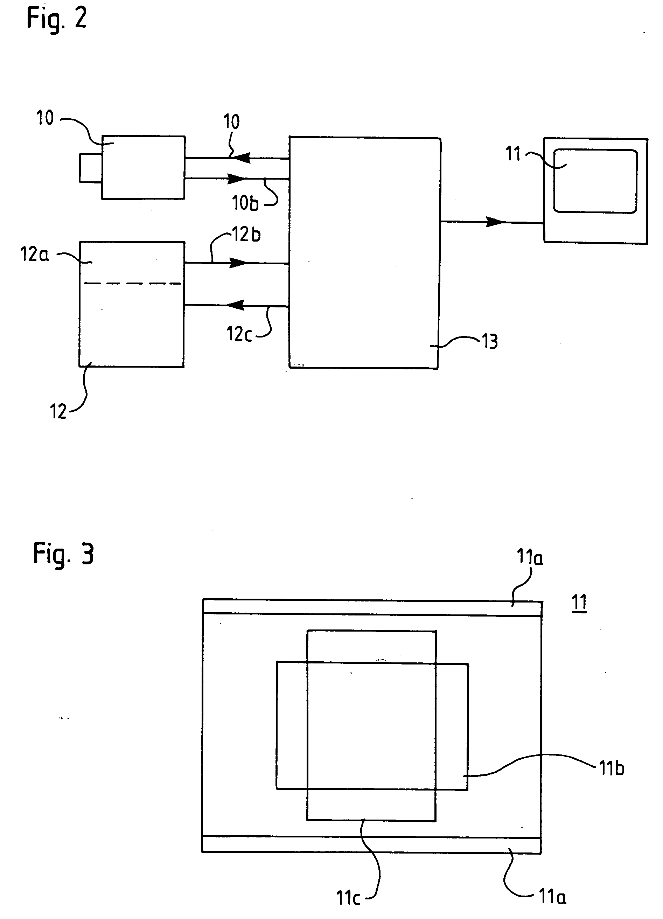

In Fig. 2 ist der Aufbau der schaltungstechnischen Mittel beschrieben. Die Schwarz/Weiß-Video-Kamera 10 ist durch eine Leitung 10a für Synchron-Impulse und durch eine Leitung 10b für die Video-Signale mit einem Video-Interface 13 verbunden. An dessen zweitem Eingang liegt ein Computer 12, der einen Video-Graphik-Adapter (VGA) 12a enthält. Der Computer erhält durch Eingabe seitens der Bedienperson oder durch geeignete Sensoren im Gerät Informationen über die gerade verfügbare Materialbreite, die Stellung der Positivmasken und/oder die Schwenkstellung der Negativbühne, d. h., ob sie längs oder quer steht. Der Graphik-Adapter ist mit dem Video-Interface 13 mit einer Leitung 12c für Horizontal- und Vertikal-Synchronimpulse und mit einer weiteren Leitung 12b zur übergabe von RGB-Signalen an das Video-Interface verbunden. Am Ausgang dieses Video-Interface liegt dann der Monitor 11. Das Interface enthält einen Taktgenerator, einen Normenwandler und eine Regelschaltung.

In Fig. 3 sind dann die auf dem Schirm des Monitors 11 sichtbaren überlagerten Bilder schematisch dargestellt. Mit 11a sind die beiden Bereiche am oberen und unteren Rand des Monitors bezeichnet, die wegen der ungleichen Seitenverhältnisse bei dem Monitorschirm 11 und dem Seitenverhältnis der Bildvorlagen keinesfalls nutzbar sind. Mit 11b ist der Rand des Kopienbereiches bezeichnet, der bei Längsstellung der Bühne mit einem verhältnismäßig schmalen Kopiermaterial für Kopierzwecke benutzt werden kann, während der Bereich 11c diesen nutzbaren Bereich bei um 90° geschwenkter Bühne zeigt.

Die Wirkungsweise der beschriebenen Einrichtung ist wie folgt: Die Größe des von der Video-Kamera abgebildeten Bereichs der Mattscheibe 8 ohne die Randstreifen 11a entspricht dem maximalen, in der Positivbühne anbringbaren Kopiermaterial 5. Auf dem Monitor 11 erscheint deshalb die Vorlage dann formatfüllend, wenn das Objektiv 4 sie formatfüllend auf den maximalen Bildbereich 5 abbildet. Zur Anzeige des jeweiligen Bildbereichs auf dem Monitor 11 wird dann folgendermaßen vorgegangen: Zunächst besteht eine Aufgabenstellung darin, diese Anzeige mit möglichst geringem Aufwand so benutzergerecht wie möglich auszuführen. Hierfür wird für die Bildanzeige der im Gerät ohnedies vorhandene Bildschirm für die Ausgabe der von einem Bildrechner ermittelten Werte verwendet. Der Monitor 11 ist also ein üblicher Computer-Monitor. In dem Computer 12 ist ein Computer-Video-Graphik-Adapter enthalten. Die üblichen einfachen Video-Kameras sind jedoch nicht geeignet, Bildsignale für Computer-Monitore zu liefern. Es muß deshalb eine Umwandlung der Bildsignale erfolgen, wenn das Bild der Vorlage 1 zusammen mit den vom Computer über den Video-Graphik-Adapter gelieferten Signalen für die verfügbare Bildgröße sichtbar gemacht werden sollen.

Im folgenden werden nur die fernsehtechnischen Vorgänge beschrieben für den Bildwiedergabe-Modus; der Textwiedergabe-Modus, für den der Monitor ursprünglich ausschließlich vorgesehen war, läuft in der üblichen Weise ab. Der Monitor wird üblicherweise mit einer Horizontalfrequenz von 31,5 kHz und einer Vertikalfrequenz von 70 Hz betrieben. Im Wiedergabe-Modus für das Video-Bild wird der Computer-Video-Graphik-Adapter in den Graphik-Modus mit 640 Pixel x 480 Zeichen umgeschaltet. Seine RGB-Ausgangssignale bewirken u. a. die Steuerung des Video-Interface für die Einblendung der Ausschnittmarkierung. Das Kamera-Video-Signal gelangt nach einer EIA/VGA-Normenwandlung, einer Negativ/Positiv-Umkehrung und einer Graphik-Einblendung zum Monitor. Dieser wird dann mit einer Horizontal-Frequenz von 31,5 kHz und einer Vertikal-Frequenz von 60 Hz betrieben.

Um das verfügbare Positiv-Format auf dem Monitor sichtbar zu machen, wird in den Monitor ein entsprechendes Linienrechteck 11b, 11c eingeblendet. Seine Größe hängt von der verwendeten Papierbreite sowie der Maskenöffnung - horizontal oder vertikal - ab und wird durch Angaben des Nennformats im Konfigurationskanalspeicher des Kopiergerätes bestimmt. Bei maximaler Maskenöffnung belegt die Ausschnittmarkierung die volle Bildbreite. Die maximale Bildhöhe kann wegen der unterschiedlichen Seiten-/Höhenverhältnisse von 4 : 3 beim Fernsehbild und von 4 : 2,66 beim Kleinbild nicht genutzt werden. Dies ist der generell abgeschnittene Rand 11a beim Monitorbild.

Zur Mischung der Video-Bilder mit den vom Computer 12 gelieferten Randbildern müßten die Signale derselben Norm entsprechen und zeitsynchron ablaufen. Wegen der Signalquelle Video-Graphik-Adapter für diese Randdarstellung, die keine Synchronisation zuläßt und außerdem keiner TV-Norm entspricht, ist es erforderlich, das Video-Kamera-Signal in seiner Norm zu wandeln, d. h., die Signale auf die VGA-Signale zu synchronisieren. Der Computer-Video-Graphik-Adapter hat dabei 640 x 480 Bildpunkte bei einer Horizontalfrequenz von 31,5 kHz und einer Vertikalfrequenz von 60 Hz, was 480 Zeilen pro Bild in 16,6 msec entspricht. Die Video-Kamera mit ihrer EIA-Norm hat eine Horizontalfrequenz von 15,75 kHz und eine Vertikalfrequenz von 60 Hz bei 242 Zeilen pro Halbbild in 16,6 msec. Das Video-Interface 13 enthält deshalb neben dem Taktgenerator einen Normenwandler für die Video-Signale der Kamera 10. Außerdem enthält es eine Regelschaltung, die die Helligkeiten der beiden Signale vom Computer und von der Video-Kamera auf dem Monitor 11 gegeneinander abgleicht.

Der Taktgenerator liefert alle zum Betrieb der Schaltung erforderlichen Steuersignale sowie die Synchronimpulse für die Video-Kamera und den Monitor. Der Oszillator des Taktgenerators wird mittels einer geeigneten Schaltung von dem Horizontal-Synchronsignal des Video-Graphik-Adapters synchronisiert. Die für die Abstimmung der Horizontal- und Vertikalablenkungen erforderlichen Impulse werden an decodierten 10- bzw. 11-Bit-Zählern abgenommen. Die Vertikal-Synchronsignale des Video-Graphik-Adapters steuern den Zyklus des Vertikalzählers.

## Patentansprüche

1. Fotografisches Kopiergerät mit einer Einrichtung zur Veränderung des Abbildungsmaßstabes, mit einem in den Abbildungsstrahlengang einbringbaren Umlenkspiegel und mit einer zur Ebene des Kopieträgers in Bezug auf den Umlenkspiegel (6) konjugierten, als Mattscheibe ausgebildeten Betrachtungsfläche, dadurch gekennzeichnet, daß zur Beurteilung des wiedergegebenen Bildes eine Videokamera (10) vorgesehen ist, die auf die Mattscheibe (8) gerichtet und mit einem Monitor (11) verbunden ist und daß der Mattscheibe eine Fresnellinse zur Lichtbündelung zugeordnet ist.

2. Fotografisches Kopiergerät nach Anspruch 1, dadurch gekennzeichnet, daß ein weiterer Umlenkspiegel (9) vorgesehen ist, derart, daß der Strahlengang zur Videokamera (10) gegenüber dem Kopierstrahlengang um 180° umgelenkt wird.

3. Fotografisches Kopiergerät nach Anspruch 1 oder 2, dadurch gekennzeichnet, daß die Video-Kamera eine Schwarz/Weiß-Kamera ist und als Monitor (11) ein Computer-Monitor verwendet wird.

4. Fotografisches Kopiergerät nach Anspruch 3, dadurch gekennzeichnet, daß zwischen Video-Kamera (10) und Monitor (11) ein Video-Interface (13) geschaltet ist, daß an einem zweiten Eingang des Video-Interface (13) ein Computer (12) mit Video-Graphik-Adapter (12a) zur Einblendung des verfügbaren Kopienformats auf dem Monitor angeschlossen ist.

5. Fotografisches Kopiergerät nach Anspruch 4, dadurch gekennzeichnet, daß das Video-Interface (13) einen Taktgenerator, einen Normenwandler und eine Regelschaltung enthält, daß der Taktgenerator die Synchronimpulse für die Video-Kamera (10) und den Monitor (11) liefert und der Oszillator des Taktgenerators seinerseits mittels der Horizontal-Synchronsignale des Video-Graphik-Adapters (12a) synchronisiert wird.

## Claims

1. Photographic copier with a device for altering the scale of reproduction, with a deflector mirror which can be brought into the reproduction light path and with a viewing surface, which is conjugate to the plane of the copy holder with respect to the deflector mirror (6) and is formed as a focusing screen, characterised in that a video camera (10) is provided to evaluate the reproduced image, which camera is directed at the focusing screen (8) and connected to a monitor (11), and that a Fresnel lens for concentrating light is associated with the focusing screen.

2. Photographic copier according to claim 1, characterised in that another deflector mirror (9) is provided such that the light path to the video camera (10) is deflected by 180° with respect to the copying light path.

3. Photographic copier according to claim 1 or 2, characterised in that the video camera is a black-and-white camera and the monitor (11) which is used is a computer monitor.

4. Photographic copier according to claim 3, characterised in that a video interface (13) is connected between the video camera (10) and the monitor (11), and that a computer (12) with a video graphics adapter (12a) is connected to a second input of the video interface (13) to superimpose the available copy format on the monitor.

5. Photographic copier according to claim 4, characterised in that the video interface (13) comprises a timing generator, a standards converter and a control circuit, that the timing generator delivers the synchronising pulses for the video camera (10) and the monitor (11), and the oscillator of the timing generator is in turn synchronised by means of the horizontal synchronising signals of the video graphics adapter (12a).

## Revendications

1. Tireuse photographique avec un dispositif pour modifier l'échelle de l'image, comportant un miroir de déviation des rayons lumineux qui peut se placer sur le trajet des rayons lumineux donnant l'image, ainsi qu'une surface d'examen, constituée d'un verre dépoli et conjuguée du support du matériau pour tirage par rapport au miroir de déviation (10), caractérisée par le fait que pour permettre de juger l'image reproduite est prévue une caméra vidéo (10) qui est orientée sur le verre dépoli (8) et qui est reliée à un moniteur (11) et qu'au verre dépoli correspond une lentille de Fresnel pour concentrer les rayons lumineux en faisceau.

2. Tireuse photographique selon la revendication 1, caractérisée par le fait qu'un autre miroir de déviation des rayons lumineux (9) est prévu de façon que le trajet des rayons lumineux allant à la caméra vidéo (10) soit dévié de 180° par rapport au trajet des rayons lumineux pour le tirage.

3. Tireuse photographique selon la revendication 1 ou la revendication 2, caractérisée par le fait que la caméra vidéo est une caméra noir et blanc et que comme moniteur (11) on emploie un' moniteur piloté par ordinateur.

4. Tireuse photographique selon la revendication 3, caractérisée par le fait qu'entre la caméra vidéo (10) et le moniteur (11) est mise en circuit une interface vidéo (13), qu'à une seconde entrée de l'interface vidéo (13) est relié un ordinateur (12) avec adaptateur graphique vidéo (12) pour donner en surimpression sur le moniteur le format de tirage disponible.

5. Tireuse photographique selon la revendication 4, caractérisée par le fait que l'interface vidéo (13) contient un générateur de signal d'horloge, un convertisseur de norme et un circuit de régulation, que le générateur du signal d'horloge fournit des impulsions de synchronisation pour la caméra vidéo (10) et pour le moniteur (11) et que l'oscillateur du générateur de signal d'horloge est de son côté synchronisé au moyen des signaux de synchronisation horizontale de l'adaptateur graphique vidéo (12a).
